# EUROPÄISCHE PATENTSCHRIFT

(11) **EP 1 456 603 B1**
(45) Veröffentlichungstag und Bekanntmachung des Hinweises auf die Patenterteilung: **24.11.2010**
(21) Anmeldenummer: 02804561.5
(22) Anmeldetag: 28.11.2002
(51) Int. Cl.: G01B 11/12

(54) **VORRICHTUNG ZUR OPTISCHEN VERMESSUNG VON BOHRUNGEN**
DEVICE FOR OPTICALLY MEASURING BOREHOLES
DISPOSITIF POUR EFFECTUER DES MESURES OPTIQUES SUR DES ORIFICES

(30) Priorität: 07.12.2001 DE 20119887 U
(43) Veröffentlichungstag der Anmeldung: 15.09.2004
(73) Patentinhaber: ROBERT BOSCH GMBH, 70442 Stuttgart (DE)
(72) Erfinder: BREIDER, Dominique, CH-1027 Lonay (CH)
(86) Internationale Anmeldenummer: PCT/DE2002/004367
(87) Internationale Veröffentlichungsnummer: WO 2003/050474

(56) Entgegenhaltungen:
- EP-A- 0 031 973
- DE-A- 19 611 613
- DE-U- 29 916 577
- US-A- 4 711 579
- US-A- 5 430 296
- PATENT ABSTRACTS OF JAPAN vol. 1998, no. 10, 31. August 1998 (1998-08-31) & JP 10 115512 A (SUMITOMO ELECTRIC IND LTD), 6. Mai 1998 (1998-05-06)
- PATENT ABSTRACTS OF JAPAN vol. 2000, no. 07, 29. September 2000 (2000-09-29) & JP 2000 097641 A (NIRECO CORP), 7. April 2000 (2000-04-07)

## Beschreibung

### Stand der Technik

Die vorliegende Erfindung betrifft eine Vorrichtung und ein Verfahren zur optischen Vermessung von Einspritzbohrungen in einem Ventilkörper eines Kraftstoffeinspritzventils, wobei die Einspritzbohrung möglichst homogen beleuchtet wird.

Die Vermessung von Bohrungen bei homogener Beleuchtung ist z.B. aus folgenden Druckschriften bekannt:
Aus der US 4 711 579 A ist eine optische Messvorrichtung zur Erfassung der Position und Dimension von Bohrungen in einem Metallteil bekannt, bei dem eine Lichtquelle eine diffusierende Scheibe beleuchtet.
Aus der JP 10-115512 A ist eine Vorrichtung bekannt, bei der eine Bohrung mit Hilfe einer Kamera und einer Lichtquelle vermessen wird, die die zu vermessende Bohrung durchleuchtet.
In der JP 2000-097641 A wird eine Vorrichtung beschrieben, mit der sich Bohrungsdurchmesser mit Hilfe einer Lichtquelle und einer optischen Messvorrichtung bestimmen lassen.
Aus der US 5 430 296 A ist eine weitere Vorrichtung bekannt, bei der eine Lichtquelle und eine optische Messvorrichtung verwendet werden, mit deren Hilfe sich Defekte in Hülsen aufspüren lassen.
Aus der EP 0 031 973 A2 ist eine weitere Vorrichtung bekannt, bei der eine Lichtquelle eine diffusierende Scheibe beleuchtet und mit Hilfe einer Kamera die Dimensionen von Löchern in dem zu vermessenden Objekt bestimmt wird.

Eine Vorrichtung und ein Verfahren speziell zur optischen Vermessung von Einspritzbohrungen sind aus der DE 196 11 613 A1 bekannt und verwenden eine Lichtquelle, die eine Seite der in einem Bauteil ausgebildeten Bohrung möglichst homogen beleuchtet. Auf der gegenüberliegenden Seite der Bohrung ist eine Kamera oder ein sonstiges optisches Aufnahmegerät angeordnet.

Die bekannte Vorrichtung umfasst einen Lichtleiter, der an seiner Spitze in eine konische Fläche mündet. Das Licht, das von einer Lichtquelle in den Lichtleiter eingespeist wird, gelangt bis zur Spitze, wo es von der konischen Fläche gestreut wird und dadurch die Bohrung, vorzugsweise eine Einspritzbohrung eines Kraftstoffeinspritzventils, wie es beispielsweise aus der DE 196 18 650 A1 bekannt ist, beleuchtet. Die konische Spitze des Lichtleiters muss für optimale Ergebnisse auf die jeweilige Einspritzbohrung justiert werden, damit die optische Vermessung der Einspritzbohrung ausreichend genau wird. Dieser Justageaufwand macht die Messung anfällig für Fehler und bedeutet einen erhöhten Aufwand.

### Vorteile der Erfindung

Die erfindungsgemäße Vorrichtung und das erfindungsgemäße Verfahren mit den Merkmalen des Anspruchs 1 bzw. des Anspruchs 2 weisen demgegenüber den Vorteil auf, dass die Beleuchtung der Bohrung extrem gleichmäßig geschieht, ohne dass eine aufwendige Justierung der Beleuchtungseinrichtung nötig ist Die Beleuchtung der Bohrung erfolgt über einen opalen (also diffusierenden) Glaskörper, der von einer Lichtquelle beleuchtet wird und der an einer Seite der Bohrung, am Bauteil anliegt. Durch den illuminierten Glaskörper wird eine Seite der Bohrung gleichmäßig erleuchtet, so dass mit einer optischen Vorrichtung eine genaue Vermessung der Bohrung von der anderen Seite der Bohrung aus erfolgen kann. Durch den Entfall der Justierung lässt sich die Messung darüber hinaus sehr schnell und damit kostengünstig durchführen.

### Zeichnung

In der Zeichnung ist die erfindungsgemäße Vorrichtung schematisch dargestellt. Es zeigt
- Figur 1 ein erstes Ausführungsbeispiel der erfindungsgemäßen Vorrichtung,
- Figur 2 ein weiteres Ausführungsbeispiel mit eine anderen Lichtquelle,
- Figur 3 ein weiteres Ausführungsbeispiel mit einer weiteren Lichtquelle,
- Figur 4 ein Ausführungsbeispiel, bei dem die Lichtquelle unmittelbar am opalen Glaskörper anliegt und
- Figur 5 ein Ausführungsbeispiel, bei dem die Lichtquelle in dem opalen Glaskörper angeordnet ist.

### Beschreibung der Ausführungsbeispiele

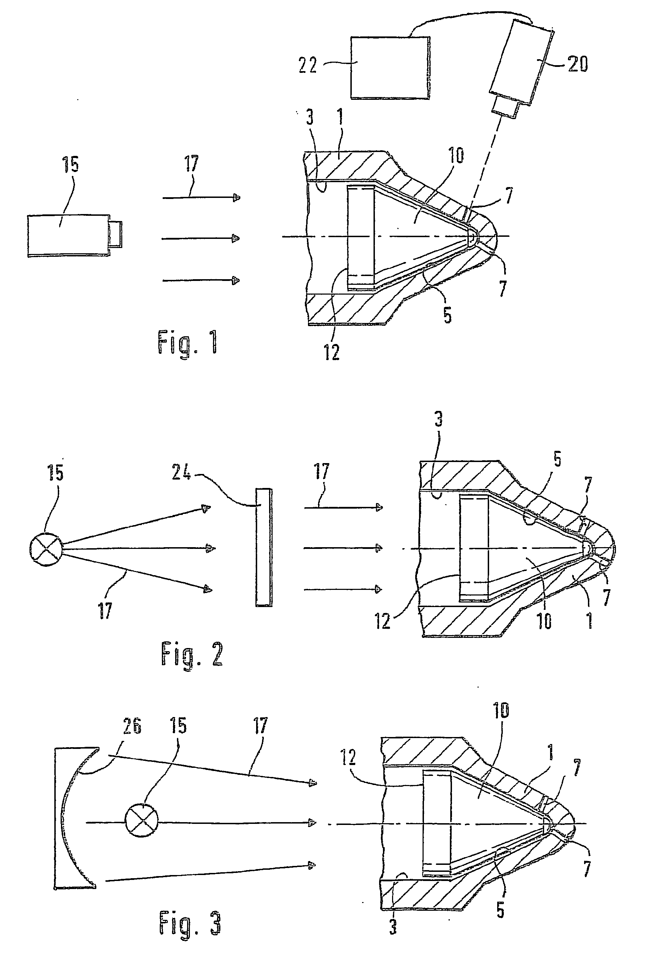

In Figur 1 ist ein Ausführungsbeispiel der erfindungsgemäßen Vorrichtung schematisch dargestellt. Als Beispiel für eine zu vermessende Bohrung dient hier eine Einspritzbohrung an einem Kraftstoffeinspritzventil, wobei das Kraftstoffeinspritzventil nur in seinen wesentlichen Teilen gezeigt ist, da derartige Kraftstoffeinspritzventile aus dem Stand der Technik hinreichend genau bekannt sind. In einem Bauteil eines Kraftstoffeinspritzventils, hier ein Ventilkörper 1, ist eine Zentralbohrung 3 ausgebildet, welche an einem Ende von einem konischen Ventilsitz 5 begrenzt wird. Vom Ventilsitz 5 ausgehend sind im Ventilkörper 1 mehrere Bohrungen 7 ausgebildet, die hier als Einspritzbohrungen 7 ausgeführt sind und die den Ventilsitz 5 in Einbaulage des Ventilkörpers 1 mit einem Brennraum einer Brennkraftmaschine verbinden. In die zentralbohrung 3 wird ein opaler Glaskörper 10 eigeführt. Der Glaskörper 10 weist eine Grundfläche 12 und eine konische Außenform auf und liegt zumindest in dem Bereich, in dem die Bohrung 7 in den Ventilsitz 5 mündet, formschlüssig mit seiner konischen Außenform am konischen Ventilsitz 5 an. Der Glaskörper 10 wird mittels einer Lichtquelle 15 von seiner Grundfläche 12 her beleuchtet. In der Figur 1 ist die Lichtquelle 15 als Laser oder LED (light emitting diode) ausgebildet, die ein Licht 17 mit weitgehend parallelen Lichtstrahlen aussendet, welche auf die Grundfläche 12 treffen. Von dort wird das Licht in den Glaskörper 10 eingekoppelt und illuminiert die konische Außenseite, so dass auch die Einspritzbohrungen 7 gleichmäßig beleuchtet werden. Der Glaskörper besteht aus einem opalen Material, so daß eine starke Streuung des Lichts im Glaskörper 10 erreicht wird. Der Glaskörper hat dabei eine diffuse bis milchige Konsistenz. Es kann hierbei vorgesehen sein, dass die konische Außenseite des Glaskörpers 10 aufgerauht ist, um ein noch stärker diffuses Licht zu erzeugen.

Die Vermessung der Einspritzbohrungen 7 erfolgt mittels einer optischen Messvorrichtung 20, die beispielsweise als Kamera 20 ausgebildet sein kann. Über eine Steuereinheit 22 wird die Kamera 20 angesteuert und es werden die von der Kamera 20 aufgenommenen Bilder gespeichert. Die Steuereinheit 22 umfasst hierbei auch einen elektronischen Rechner, der mithilfe eines geeigneten Programms aus den von der Kamera 20 aufgenommenen Bildern die dreidimensionale Form der Einspritzbohrung 7 berechnet.

In Figur 2 ist ein weiteres Ausführungsbeispiel der erfindungsgemäßen Vorrichtung dargestellt. Als Lichtquelle 15 dient hier eine elektrisch betriebene Lampe, die ungerichtetes Licht 17 abstrahlt. Um das Licht 17 auf die Grundfläche 12 zu konzentrieren, ist zwischen der Lichtquelle 15 und dem Glaskörper 10 eine Linse oder ein Linsensystem 24 angeordnet, welches das Licht 17 der Lichtquelle 15 entsprechend auf den Glaskörper 10 bündelt. Die optische Messeinrichtung 20 ist in der Figur 2 der Übersichtlichkeit halber weggelassen worden.

In Figur 3 ist ein weiteres Ausführungsbeispiel dargestellt. Die Lichtquelle 15 ist ebenfalls eine elektrisch betriebene Lampe, jedoch erfolgt die Bündelung des Lichts 17 hier mithilfe eines Hohlspiegels 26.

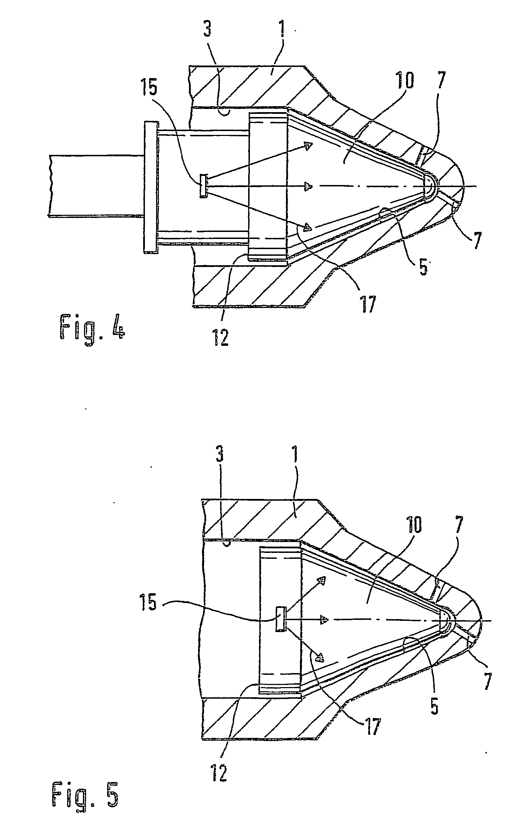

In Figur 4 ist ein weiteres Ausführungsbeispiel dargestellt. Hier ist die Lichtquelle 15 als optoelektronische Lichtquelle ausgebildet und direkt auf den Glaskörper 10 aufgesetzt. Es werden somit keine zusätzlichen optischen Elemente wie Spiegel oder Linsen benötigt. Als Lichtquelle eignen sich in diesem Fall vor allem Laser-Dioden oder LEDs.

In Figur 5 ist als weiteres Ausführungsbeispiel die Lichtquelle in den Glaskörper 10 integriert, so dass eine Ausrichtung der Lichtquelle oder sonstiger optischer Hilfsmittel entfällt.

## Patentansprüche

1. Vorrichtung zur optischen Vermessung von Einspritzbohrungen (7) in einen Ventilkörper (1) eines Kraftstoffeinspritzventils, in dem eine von einem konischen Ventilsitz (5) begrenzte Zentralbohrung (3) ausgebildet ist, von welchem Ventilsitz (5) die Einspritzbohrung (7) ausgeht, mit einer Lichtquelle (15) und einer optischen Messvorrichtung (20) zur optischen Erfassung der Geometrie der Einspritzbohrung (7), und einem opalen Glaskörper (10), wobei der opale Glaskörper (10) eine konische Form aufweist, mit der er formschlüssig am konischen Ventilsitz anlegbar ist, wobei der Glaskörper aus einem opalen Material besteht, um eine starke Streuung des Lichts im Glaskörper zu erreichen, und wobei die Lichtquelle (15) den opalen Glaskörper (10) beleuchtet, wenn er auf der der optischen Messvorrichtung (20) gegenüberliegenden Seite der Einspritzbohrung (7) am Ventilsitz (5) im Ventilkörper (1) anliegt.

2. Verfahren zur optischen Vermessung von Einspritzbohrungen (7) in einen Ventilkörper (1) eines Kraftstoffeinspritzventils, in dem eine von einem konischen Ventilsitz (5) begrenzte Zentralbohrung (3) ausgebildet ist, von welchem Ventilsitz (5) die Einspritzbohrung (7) ausgeht, mit folgenden Verfahrensschritten:
- Einführen eines opalen Glaskörpers (10) in die Zentralbohrung (3), so dass der Glaskörper (10) formschlüssig am Ventilsitz (5) anliegt,
- Beleuchten des opalen Glaskörpers (10) mit einer Lichtquelle (15),
- Vermessen der Einspritzbohrungen (7) mit einer optischen Messvorrichtung (20) von der dem Glaskörper (10) gegenüberliegenden Seite der Einspritzbohrungen (7) aus.

## Claims

1. Device for optically measuring injection bores (7) in a valve body (1) of a fuel injection valve in which is formed a central bore (3) which is delimited by a conical valve seat (5), from which valve seat (5) the injection bore (7) extends, having a light source (15) and having an optical measuring device (20) for optically detecting the geometry of the injection bore (7), and having an opal glass body (10), the opal glass body (10) having a conical shape with which it can bear against the conical valve seat (5) in a form-fitting manner, the glass body being composed of an opal material in order to obtain an intense diffusion of the light in the glass body, and the light source (15) illuminating the opal glass body (10) when the latter bears against the valve seat (5) in the valve body (1) on the opposite side of the injection bore (7) from the optical measuring device (20).

2. Method for optically measuring injection bores (7) in a valve body (1) of a fuel injection valve in which is formed a central bore (3) which is delimited by a conical valve seat (5), from which valve seat (5) the injection bore (7) extends, having the following method steps:
- inserting an opal glass body (10) into the central bore (3) such that the glass body (10) bears against the valve seat (5) in a form-fitting manner,
- illuminating the opal glass body (10) by means of a light source (15),
- measuring the injection bores (7) by means of an optical measuring device (20) from the opposite side of the injection bores (7) from the glass body (10).

## Revendications

1. Dispositif pour la mesure optique d'alésages d'injection (7) dans un corps de soupape (1) d'une soupape d'injection de carburant, dans lequel est réalisé un alésage central (3) limité par un siège de soupape conique (5), duquel siège de soupape (5) part l'alésage d'injection (7), avec une source de lumière (15) et un dispositif de mesure optique (20) pour la détection optique de la géométrie de l'alésage d'injection (7), et un corps en verre opale (10), le corps en verre opale (10) présentant une forme conique avec laquelle il peut être appliqué par engagement positif sur le siège de soupape conique (5), le corps en verre se composant d'un matériau opale afin de produire une diffraction importante de la lumière dans le corps en verre, la source de lumière (15) éclairant le corps en verre opale (10) lorsqu'il s'applique sur le côté de l'alésage d'injection (7) opposé au dispositif de mesure optique (20) sur le siège de soupape (5) dans le corps de soupape (1).

2. Procédé pour la mesure optique d'alésages d'injection (7) dans un corps de soupape (1) d'une soupape d'injection de carburant, dans lequel est réalisé un alésage central (3) limité par un siège de soupape conique (5), duquel siège de soupape conique (5) part l'alésage d'injection (7), présentant les étapes de procédé suivantes :
- insertion d'un corps en verre opale (10) dans l'alésage central (3), de sorte que le corps en verre (10) s'applique par engagement positif contre le siège de soupape (5),
- éclairage du corps en verre opale (10) avec une source de lumière (15),
- mesure des alésages d'injection (7) avec un dispositif de mesure optique (20) depuis le côté des alésages d'injection (7) opposé au corps en verre (10).
